# EUROPEAN PATENT APPLICATION

(11) **EP 4 300 569 A1**
(43) Date of publication of application: **03.01.2024**
(21) Application number: 22759177.3
(22) Date of filing: 20.01.2022
(51) Int. Cl.: H01L 23/36, H01L 23/373, C08L 83/04, C08L 83/05, C08L 83/07, C09K 5/14, C08K 3/01

(54) **HEAT-CONDUCTIVE COMPOSITION, HEAT-CONDUCTIVE MEMBER, AND BATTERY MODULE**

(30) Priority: 26.02.2021 JP 2021030602
(71) Applicant: Sekisui Polymatech Co., Ltd., Saitama-city, Saitama 338-0837 (JP)
(72) Inventor: IWAMOTO, Tatsuya, Saitama-city, Saitama 338-0837 (JP); KITADA, Gaku, Saitama-city, Saitama 338-0837 (JP)
(74) Representative: Ter Meer Steinmeister & Partner
(86) International application number: PCT/JP2022/002051
(87) International publication number: WO 2022/181134

(57) **Abstract**

The present invention provides a thermally conductive composition comprising: (A) an organopolysiloxane containing at least two alkenyl groups, (B) a hydrogenorganopolysiloxane containing at least two hydrosilyl groups, (C) a thermally conductive filler, and (D) a polysiloxane compound containing at least one alkyl group having 4 or more carbon atoms. According to the present invention, it is possible to provide the thermally conductive composition capable of forming a thermally conductive member having an excellent thermally conductive property and high adhesive force to polypropylene.

## Description

### Technical Field

The present invention relates to a thermally conductive composition, a thermally conductive member, and a battery module using the thermally conductive member as a gap filler.

### Background Art

A cured product formed by filling a curable thermally conductive composition between a heating element and a heat sink and then curing it has been used as a thermally conductive member that transfers heat generated from the heating element to the heat sink. The curable thermally conductive composition can fill an arbitrary gap between the heating element and the heat sink because it has fluidity. Therefore, the thermally conductive member to be formed can reliably fill the gap even if the gap between the heating element and the heat sink is not constant, and has been used as a thermally conductive gap filler.

For example, as disclosed in PTL 1, it has been known that the thermally conductive member is used as the gap filler for a battery module. The thermally conductive member is arranged between a battery cell which is the heating element and a module housing which is the heat sink, and fulfills a role of dissipating the heat of the battery cell to the outside. It is also used for arranging between the battery cells to fix them in place and keeping a clearance state.

The thermally conductive member has a certain degree of stickiness and often adhere to adherends such as the heating element and the heat sink to the extent that it does not shift or fall off from them, and when fixing more rigidly, the heating element and the heat sink are sometimes made into a mating structure, or fixed with screws or the like.

By the way, when using the thermally conductive member as in-vehicle applications, even if it has the certain degree of stickiness, there is concern that vibration may cause it to peel off from the adherends such as the heating element and the heat sink, resulting in loss of thermally conductive properties. From such circumstances, in PTL 2, disclosed is a thermally conductive composition including a curable organopolysiloxane, an alkoxysilane compound, and a thermally conductive filler, wherein the alkoxysilane compound is an alkoxysilane containing a long-chain alkenyl group having 8 to 18 carbon atoms; and it is described that it has excellent adhesive force to the adherends.

### Citation List

### Patent Literature

PTL 1: WO 2018/173860
PTL 2: WO 2020/213306

### Summary of Invention

### Technical Problem

Conventionally, for a housing of a lithium-ion battery module, metals such as highly reliable aluminum alloys have been used, but in recent years, polypropylene, which has a certain degree of heat resistance, toughness, and light weight property, in spite of an inexpensive general-purpose resin, has been used in view of weight reduction and cost reduction.

However, it has been found that a conventionally used thermally conductive member has weak adhesive force to the polypropylene and were prone to cause failures such as peeling.

Therefore, an objective of the present invention is to provide a thermally conductive composition capable of forming a thermally conductive member having excellent thermally conductive properties and high adhesive force to the polypropylene.

### Solution to Problem

As a result of intensive studies, the present inventors have found that the above problems can be solved by a thermally conductive composition comprising (A) an organopolysiloxane containing at least two alkenyl groups, (B) a hydrogenorganopolysiloxane containing at least two hydrosilyl groups, (C) a thermally conductive filler, and (D) a polysiloxane compound containing at least one alkyl group having 4 or more carbon atoms, and have completed the following present invention. That is, the present invention provides the following [1] to [8].
[1] A thermally conductive composition comprising: (A) an organopolysiloxane containing at least two alkenyl groups, (B) a hydrogenorganopolysiloxane containing at least two hydrosilyl groups, (C) a thermally conductive filler, and (D) a polysiloxane compound containing at least one alkyl group having 4 or more carbon atoms.
[2] The thermally conductive composition according to the above [1], wherein the (D) polysiloxane compound contains a reactive group that can react with the (A) component or the (B) component.
[3] The thermally conductive composition according to the above [1] or [2], wherein the reactive group is a (meth)acryloyl group.
[4] The thermally conductive composition according to any one of the above [1] to [3], wherein the number of carbons of the alkyl group contained in the (D) polysiloxane compound is 4 or more and 30 or less.
[5] The thermally conductive composition according to any one of the above [1] to [4], wherein the number of carbons of the alkyl group contained in the (D) polysiloxane compound is 4 or more and 8 or less.
[6] The thermally conductive composition according to any one of the above [1] to [5], wherein the alkyl group contained in the (D) polysiloxane compound is a butyl group.
[7] A thermally conductive member made by curing the thermally conductive composition according to any one of the above [1] to [6].
[8] A battery module comprising a gap filler composed of the thermally conductive member according to the above [7], a plurality of battery cells, and a module housing for storing the plurality of the battery cells, wherein the gap filler is arranged inside the module housing.

### Advantageous Effects of Invention

According to the present invention, it is possible to provide a thermally conductive composition capable of forming a thermally conductive member having excellent thermally conductive properties and high adhesive force to polypropylene.

### Brief Description of Drawings

[Fig. 1] Fig. 1 is a diagrammatic perspective view showing a typical configuration of a battery module according to the present invention.
[Fig. 2] Fig. 2 is a diagrammatic perspective view showing a typical configuration of a battery cell contained in the battery module.

### Description of Embodiments

### [Thermally Conductive Composition]

Hereinafter, a thermally conductive composition of the present invention will be described in detail.

The thermally conductive composition of the present invention comprises (A) an organopolysiloxane containing at least two alkenyl groups, (B) a hydrogenorganopolysiloxane containing at least two hydrosilyl groups, (C) a thermally conductive filler, and (D) a polysiloxane compound containing at least one alkyl group having 4 or more carbon atoms. Curing the thermally conductive composition forms a thermally conductive member of the present invention.

The reason why the thermally conductive member formed from the thermally conductive composition of the present invention has high adhesive force to polypropylene is not certain, but is inferred as follows. Since the (D) polysiloxane compound has a polysiloxane structure, it is compatible with a silicone matrix formed by reaction between the (A) component and the (B) component. Furthermore, containing the alkyl group having 4 or more carbon atoms in the (D) polysiloxane compound provides a high affinity for the polypropylene. As a result, it is considered that surface energy of the silicone matrix constituting the thermally conductive member is lowered, to improve the adhesive force to the polypropylene.

### <(A) component, (B) component>

The thermally conductive composition of the present invention includes the (A) organopolysiloxane containing at least two alkenyl groups (hereinafter also referred to as the (A) component) and the (B) hydrogenorganopolysiloxane containing at least two hydrosilyl groups (hereinafter also referred to as the (B) component). The (A) component and the (B) component are different components from the (D) component described later.

The (A) component and the (B) component are generally used as a base agent and a curing agent, respectively. The (A) component and the (B) component are reacted through an addition reaction to form a cured product that is a matrix composed of silicone rubber. Since the silicone rubber is easily subjected to compressive deformation, the thermally conductive member of the present invention is easy to be assembled between a heating element and a heat sink.

The (A) component is not limited as long as it is an organopolysiloxane containing at least two alkenyl groups in one molecule. The number of the alkenyl groups in one molecule in the (A) component is preferably 2 to 20, more preferably 2 to 10.

Examples of the alkenyl groups in the (A) component include those having 2 to 8 carbon atoms, such as a vinyl group, an allyl group, a butenyl group, a pentenyl group, a hexenyl group, a heptenyl group, and an octenyl group.

The (A) components may be used alone, or in combination of two or more.

The (B) component is not limited as long as it is a hydrogenorganopolysiloxane containing at least two hydrosilyl groups in one molecule. The hydrosilyl group means a hydrogen atom bound to a silicon atom (a SiH group). The number of the hydrosilyl groups in one molecule in the (B) component is preferably 2 to 100, and more preferably 2 to 50.

The (B) components may be used alone, or in combination of two or more.

It is preferable that the (B) component includes (Bx) a hydrogenorganopolysiloxane containing the hydrosilyl group at a proportion of 2 mmol/g or more (hereinafter also referred to as the (Bₓ) component). This increases hardness of the thermally conductive member to be formed and facilitates improved adhesiveness to the polypropylene.

The proportion of the hydrosilyl group contained in the (Bₓ) component is preferably 4 mmol/g or more, more preferably 6 mmol/g or more.

A content of the (Bₓ) component should be adjusted to achieve desired hardness of a cured product. Specifically, the content of the (Bₓ) component should be increased when desiring to harden the cured product, and the content of the (Bₓ) component should be decreased when desiring to soften the cured product.

It is preferable that the (A) component and the (B) component are in a liquid state before curing. The liquid state before the curing facilitates high filling of the thermally conductive filler. In the present description, the liquid state means liquid at room temperature (23°C) and under 1 atmospheric pressure. The addition reaction between the (A) component and the (B) component is preferably performed in the presence of an addition reaction catalyst, and the addition reaction catalyst is preferably a platinum catalyst.

### <(C) component>

The thermally conductive composition of the present invention includes the (C) thermally conductive filler. Including the (C) thermally conductive filler improves thermally conductive properties of the thermally conductive member formed from the thermally conductive composition.

Examples of the (C) thermally conductive filler include, e.g., metal, metal oxide, metal nitride, metal hydroxide, a carbon material, and oxide, nitride, and carbide other than the metal, etc. Further, examples of a shape of the (C) thermally conductive filler include a sphere, an irregular form, etc. in the powder.

In the (C) thermally conductive filler, examples of the metal include aluminum, copper, nickel, etc.; examples of the metal oxide include aluminum oxide as typified by alumina, magnesium oxide, zinc oxide, etc.; and examples of the metal nitride include aluminum nitride and the like. Examples of the metal hydroxide include aluminum hydroxide. Furthermore, examples of the carbon material include spherical graphite and the like. Examples of the oxide, the nitride, and the carbide other than the metal include quartz, boron nitride, silicon carbide, etc. Among these, the aluminum oxide is preferable from the viewpoint of improving heat dissipation of the thermally conductive member, and the aluminum hydroxide is preferable when flame retardance is desired to be improved.

As the (C) thermally conductive filler, one type of them described above may be used alone, or two or more may be used in combination.

An average particle size of the (C) thermally conductive filler is preferably 0.1 to 200 µm, more preferably 0.5 to 100 µm, even more preferably 1 to 70 µm.

As to the (C) thermally conductive filler, it is preferable that a small particle size thermally conductive filler having 0.1 µm or more and 5 µm or less of the average particle size and a large particle size thermally conductive filler having more than 5 µm and 200 µm or less of the average particle size are used in combination. Using the thermally conductive fillers having a different average particle size can increase a filling rate. A volume ratio of the small particle size thermally conductive filler to the large particle size thermally conductive filler (the small particle size thermally conductive filler / the large particle size thermally conductive filler) is preferably 0.05 to 5, more preferably 0.1 to 1, even more preferably 0.2 to 0.8.

Further, the average particle size of the (C) thermally conductive filler can be measured through observation with an electron microscope or the like. More specifically, the particle sizes of 50 arbitrary particles of the (C) thermally conductive filler are measured by using, e.g., the electron microscope or an optical microscope, and an average value thereof (an arithmetic average value) can be adopted as the average particle size.

A content of the (C) thermally conductive filler is preferably 150 to 3,000 parts by mass, more preferably 200 to 2,000 parts by mass, even more preferably 300 to 1,000 parts by mass, with respect to 100 parts by mass of the total of the (A) component, the (B) component, and the (D) polysiloxane compound. The content of the (C) thermally conductive filler at the above lower limit or more allows a certain level of the thermally conductive properties to be imparted to the thermally conductive member. The content of the (C) thermally conductive filler at the above upper limit or less allows the (C) thermally conductive filler to be appropriately dispersed in the thermally conductive member. This can also prevent the viscosity of the thermally conductive composition from becoming higher than necessary.

### <(D) component>

The thermally conductive composition of the present invention includes the (D) polysiloxane compound containing at least one alkyl group having 4 or more carbon atoms ((D) polysiloxane compound). Including the (D) polysiloxane compound improves the adhesiveness of the thermally conductive member formed from the thermally conductive composition to the polypropylene.

The (D) polysiloxane compound needs only to contain at least one alkyl group having 4 or more carbon atoms, but from the viewpoints of adhesiveness to the polypropylene and ease of producing the compound, the number of the alkyl groups having 4 or more carbon atoms in the (D) polysiloxane compound is preferably 1 to 3, more preferably 1 to 2, even more preferably 1.

The alkyl group having 4 or more carbon atoms is not limited as long as the number of carbon atoms is 4 or more, and may be linear or branched. The number of carbon atoms in the alkyl group having 4 or more carbon atoms is preferably 4 or more and 30 or less, more preferably 4 or more and 12 or less, even more preferably 4 or more and 8 or less, and particularly preferably 4. That is, as the alkyl groups having 4 or more carbon atoms, a butyl group is particularly preferable.

When the (D) polysiloxane compound contains a plurality of the alkyl group having 4 or more carbon atoms, the plurality of the alkyl groups having 4 or more carbon atoms may be the same or different.

From the viewpoint of improving the adhesiveness to the polypropylene, it is preferable that when there is one alkyl group having 4 or more carbon atoms, the alkyl group having 4 or more carbon atoms is present at an end of the (D) polysiloxane compound. It is preferable that when there are two or more alkyl groups having 4 or more carbon atoms, at least one alkyl group having 4 or more carbon atoms is present at an end of the (D) polysiloxane compound.

It is also preferable that the (D) polysiloxane compound contains a reactive group that can react with the above (A) component or the (B) component. This makes it easier for the (D) polysiloxane compound to be linked to the (A) component and the (B) component by chemical bonds, thereby being easy to lower the surface energy of the silicone matrix. Furthermore, as described above, since the (D) polysiloxane compound contains the alkyl group having 4 or more carbon atoms, affinity of the silicone matrix with the polypropylene is improved, to provide excellent adhesive force between both of them.

The reactive group that can react with the (A) component or the (B) component is not limited, but it is preferable that it is the reactive group selected from the group consisting of a (meth)acryloyl group, an alkenyl group, and a hydrosilyl group (the SiH group). The (meth)acryloyl group and the alkenyl group are the reactive groups that can react with the (B) component, and the hydrosilyl group (the SiH group) is the reactive group that can react with the (A) component.

The (meth)acryloyl group means an acryloyl group or a methacryloyl group.

Examples of the alkenyl group include, e.g., those having 2 to 8 carbon atoms, and such as the vinyl group, the allyl group, the butenyl group, the pentenyl group, the hexenyl group, the heptenyl group, and the octenyl group.

Among these reactive groups, the (meth)acryloyl group is preferable, and the methacryloyl group is more preferable.

When the (D) polysiloxane compound contains the reactive group, the number of the reactive groups contained in the (D) polysiloxane compound may be one, or two or more, but one is preferable.

The (D) polysiloxane compound in the present invention is preferably a compound represented by the following Formula (1).

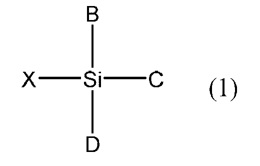

X is an organic group containing the reactive group. At least one of B, C, and D is a group represented by the following Formula (2), and the remainder is a methyl group or a phenyl group. When there is a plurality of groups represented by Formula (2), the plurality of the groups represented by Formula (2) may be the same or different. Among them, it is preferable that one or two of B, C, and D is a group represented by the following Formula (2) and the remainder is the methyl group.

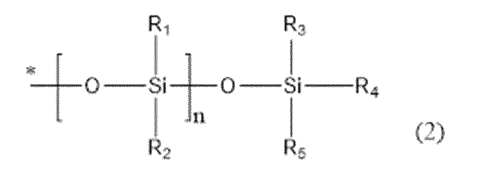

R₁ and R₂ are each independently the methyl group or the phenyl group. At least one of R₃, R₄, and R₅ is the alkyl group having 4 or more carbon atoms, and the remainder is each independently the methyl group, the phenyl group, or X (i.e., the above-described organic group containing the reactive group); and preferably the remainder is each independently the methyl group or the phenyl group. _{*} means a bonding hand which is bound to Si in Formula (1). n is an integer of 9 to 130.

Among them, it is preferable that R₃ is the alkyl group having 4 or more carbon atoms, and R₄ and R₅ are each independently the methyl group or the phenyl group; and it is more preferable that both R₄ and R₅ are the methyl groups.

The number of carbon atoms in the alkyl group having 4 or more carbon atoms is preferably 4 or more and 30 or less, more preferably 4 or more and 12 or less, even more preferably 4 or more and 8 or less, and particularly preferably 4. That is, as the alkyl group having 4 or more carbon atoms, the butyl group is particularly preferable.

The reactive group contained in X is the same as the above reactive group described as the reactive group that can react with the (A) component or the (B) component. X is preferably the organic group having 2 to 50 carbon atoms that contains the reactive group, more preferably the organic group having 3 to 15 carbon atoms that contains the reactive group.

It is preferable that X is any one of the following X₁ to X₆.

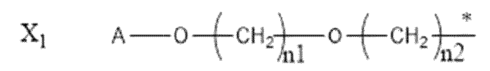

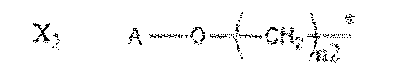

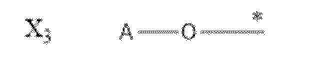

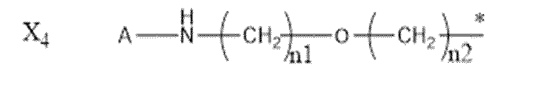

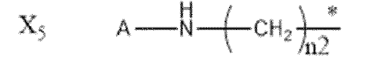

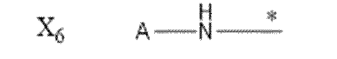

In the above X₁ to X₆, A is the reactive group. A is preferably the reactive group selected from the group consisting of the (meth)acryloyl group, the alkenyl group, and the hydrosilyl group (the SiH group), more preferably the (meth)acryloyl group, even more preferably the methacryloyl group. n1 is an integer of 1 to 2. n2 is an integer of 1 to 6, preferably the integer of 2 to 4. _{*} represents the bonding hand which is bound to Si in Formula (1).

Among the above X₁ to X₆, X is preferably X₂ from the viewpoint of enhancing the adhesiveness of the thermally conductive member to the polypropylene.

A content of the (D) polysiloxane compound in the thermally conductive composition is preferably 0.1 to 30 parts by mass, more preferably 0.5 to 20 parts by mass, even more preferably 1 to 10 parts by mass, with respect to 100 parts by mass of the total of the (A) component, the (B) component, and the (D) polysiloxane compound. Setting the content of the (D) polysiloxane compound at the above range facilitates the improved adhesiveness of the thermally conductive member formed from the thermally conductive composition to the polypropylene.

In the thermally conductive composition of the present invention, a variety of additives can be included. Examples of the additives include, e.g., a catalyst, a dispersant, a fire retardant, a plasticizer, a curing retardant, an antioxidant, a colorant, etc.

A form of the thermally conductive composition of the present invention may be any of a one-component type, or a two-component type in which a first agent and a second agent are combined together, but the two-component type is preferable from the viewpoint of storage stability.

In the two-component type thermally conductive composition, a mass ratio of the second agent to the first agent (the second agent / the first agent) is preferably 1 or a value close to 1, specifically, preferably 0.9 to 1.1, more preferably 0.95 to 1.05. In this way, setting the mass ratio of the second agent to the first agent at 1 or the value close to 1 facilitates preparation of the thermally conductive composition. In addition, in the two-component type thermally conductive composition, a viscosity ratio of the second agent to the first agent (the second agent / the first agent) is also preferably 1 or a value close to 1, specifically, preferably 0.5 to 2.0, more preferably 0.8 to 1.2. In this way, setting the mass ratio of the second agent to the first agent at 1 or the value close to 1 facilitates uniform mixture of the thermally conductive composition. Methods for adjusting the mass ratio and the viscosity ratio will be described later.

The two-component type thermally conductive composition is more specifically one in which the first agent includes the (A) organopolysiloxane containing at least two alkenyl groups (A component) (base agent) and the second agent includes the (B) hydrogenorganopolysiloxane containing at least two hydrosilyl groups (B component) (curing agent).

It is preferable that the addition reaction catalyst is included in the first agent and not in the second agent. Doing so provides the first agent and the second agent with excellent storage stability before mixing and accelerated reaction after the mixing, to be cured quickly, thus being able to make various properties of the thermally conductive member obtained by curing good. A factor therefor is not certain, but it is inferred that the addition reaction catalyst such as a platinum catalyst falls into a state where it is coordinated to the alkenyl group, which is an addition reaction site of the (A) component, and the curing proceeds easily.

The (C) thermally conductive filler should be included in at least any one of the first agent and the second agent, but is preferably included in both the first agent and the second agent. When the (C) thermally conductive filler is included in both the first agent and the second agent, it becomes easy to mix the first agent and the second agent. In addition, since the mass ratio and the viscosity ratio of the second agent to the first agent can be set at 1 or the values close to 1 when preparing the thermally conductive composition, making it easier to use as the two-component type.

In addition, it is preferable that the second agent includes the (A) component. Including the (A) component which is the base agent in addition to the (B) component which is the curing agent in the second agent, facilitates adjustment of the mass ratio and the viscosity ratio of the second agent to the first agent to 1 or the values close to 1 when preparing the thermally conductive composition. On the other hand, the first agent should not include the (B) component which is the curing agent.

When adopting a form in which the second agent includes in addition to the (B) component the (A) component and a trace amount of the addition reaction catalyst, in order to prevent addition reaction curing during storage, adding a curing retardant and offsetting the reaction-catalyzing effect at room temperature due to the addition reaction catalyst added in the second agent can also achieve a state in which substantially no addition reaction catalyst is included. Specifically, when the trace amount of the addition reaction catalyst is included in the second agent, it is possible to add the curing retardant in order to suppress the reaction between the (B) component and the (A) component by the addition reaction catalyst during the storage. Examples of the curing retardant include, e.g., an alcohol derivative having a carbon-carbon triple bond, such as 3-methyl-1-butin-3-ol, 3,5-dimethyl-1-hexin-3-ol, phenylbutynol, and 1-ethynyl-1-cyclohexanol; an enyne compound such as 3-methyl-3-penten-1-yne, and 3,5-dimethyl-3-hexen-1-yne; an alkenyl group-containing low-molecular-weight siloxane such as tetramethyltetravinylcyclotetrasiloxane and tetramethyltetrahexenylcyclotetrasiloxane; and an alkyne-containing silane, such as methyl-tris(3-methyl-1-butin-3-oxy)silane and vinyl-tris(3-methyl-1-butin- 3 - oxy)silane.

Besides, in the second agent, even in a case of including no curing retardant, the addition reaction catalyst may be included to the extent that reactions are not accelerated at room temperature.

The platinum catalyst, e.g., chloroplatinic acid or a complex compound of chloroplatinic acid and olefins, vinylsiloxane, or an acetylene compound, which is used as the addition reaction catalyst, has an activation function of acting on the (B) component which is the curing agent, to enhance its reactivity. Among means for avoiding unnecessary activation of the curing agent during the storage of the second agent, the most effective means is to include no addition reaction catalyst in the second agent.

The (D) polysiloxane compound may be included in either the first agent or the second agent, or both. When the (D) polysiloxane compound contains the reactive group that can react with the (A) component or (B) component, a method for blending the (D) polysiloxane compound should be determined depending on a type of the reactive group from the viewpoint of the storage stability.

When the reactive group contained in the (D) polysiloxane compound is a group that can react with the (B) component (e.g., the (meth)acryloyl group or the alkenyl group), it is preferable that the (D) polysiloxane compound is blended in the first agent from the viewpoint of the storage stability. Further, when the reactive group contained in the (D) polysiloxane compound is a group that can react with the (A) component (e.g., the hydrosilyl group), it is preferable that the (D) polysiloxane compound is blended in the second agent from the viewpoint of the storage stability.

With respect to the thermally conductive composition, a curing temperature should be selected depending on a type and an amount blended of the (B) component used as the curing agent, as well as a type and an amount added of the addition reaction catalyst added. For example, in the two-component type, the first agent and the second agent should be in a form that the curing is performed by simply mixing them and leaving them at room temperature, but a form that the curing is accelerated by heating can also be selected.

### [Thermally Conductive Member]

Curing the thermally conductive composition of the present invention can form the thermally conductive member. Hardness of the thermally conductive member (i.e., the cured product of the thermally conductive composition) is, e.g., 30-90, preferably 35-80, more preferably 40-70, in terms of a value that is measured by a type E durometer of JIS K 6253 (hereinafter referred to as "E hardness").

Setting the E hardness of the thermally conductive member at the above lower limit or more provides an improved adhesiveness between the thermally conductive member and the polypropylene. It is inferred that this is because the thermally conductive member has a certain hardness, which suppresses cohesive fracture. In addition, setting the E-hardness of the thermally conductive member at the above upper limit or less can secure softness to follow the shape of the heating element or the heat sink well and sufficient adhesiveness with the heating element or the heat sink.

Thermal conductivity of the thermally conductive member (i.e., the cured product of the thermally conductive composition) is preferably 1.0 W/m·K or more, more preferably 1.5 W/m K or more, and even more preferably 2.0 W/m K or more. Setting it at these lower limits or more provides favorable thermally conductive properties. Therefore, when it is used as, e.g., a gap filler in a battery cell module, it is possible to efficiently transfer heat generated from a battery cell to a module housing through the gap filler and to suppress an excessive increase in a temperature of the battery cell. The thermally conductive member is better when it has a higher thermal conductivity, but practically, the thermal conductivity is, e.g., 7 W/m K or less.

### [Battery Module]

A battery module according to the present invention comprises the gap filler composed of the thermally conductive member, a plurality of the battery cells, and the module housing for storing the plurality of the battery cells, the gap filler being arranged inside the module housing.

The gap filler composed of the thermally conductive member is filled between the battery cells themselves, and between the battery cells and the module housing, and the gap filler thus filled adheres to the battery cells and the module housing. Thereby, the gap filler between the battery cells has a function of keeping a clearance state between the battery cells. Further, the gap filler between the battery cells and the module housing has functions of adhering to both the battery cells and the module housing, and transferring the heat generated in the battery cells to the module housing.

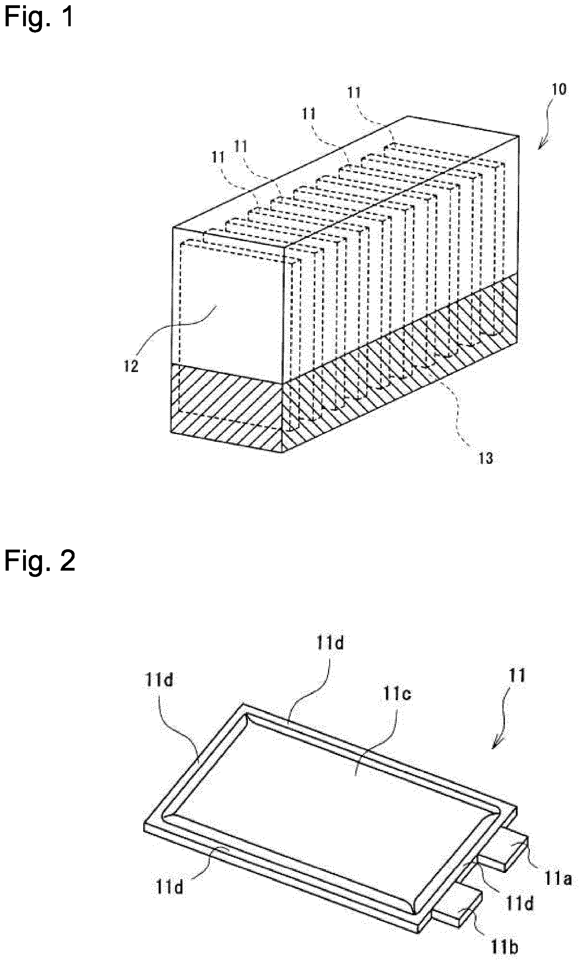

Fig. 1 shows a specific configuration of the battery module. Fig. 2 shows a specific configuration of each battery cell. As shown in Fig. 1, a plurality of battery cells 11 is arranged within a battery module 10. Each battery cell 11 is laminated and sealed in a flexible exterior film and has an overall shape of a flat body in which thickness is thin compared with magnitude of height or width. In such a battery cell 11, as shown in Fig. 2, a positive electrode 11a and a negative electrode 11b appear outside, and a central portion 11c of the flat surface is formed to be thicker than crimped end portions 11d.

As shown in Fig. 1, each of the battery cells 11 is arranged such that the flat surfaces thereof face each other. In the configuration of Fig. 1, a gap filler 13 is not filled such that the whole of the plurality of battery cells 11, which are stored in a module housing 12, are covered. The gap filler 13 is filled so as to fill gaps present in a part (a bottom-side part) of the inside of the module housing 12. The gap filler 13 is filled between the battery cells 11 each other, between the battery cell 11 and the module housing 12, and adheres to the surfaces of the battery cells 11 and the inner surfaces of the module housing 12 in this part.

The gap filler 13 filled between the battery cells 11 each other is adhered to the surfaces of both of battery cells 11, but the gap filler 13 itself has the above-described hardness and thereby has moderate elasticity and softness, which makes it possible to mitigate strain and deformation caused by an external force even if the external force is applied to displace a spacing between the battery cells 11 each other. Therefore, the gap filler 13 has the function of keeping the clearance state between the battery cells 11 each other.

The gap filler 13 filled into the gap between the battery cell 11 and the inner surface of the module housing 12 also closely adheres to the surfaces of the battery cell 11 and the inner surface of the module housing 12. As a result, the heat generated in the inside of the battery cell 11 is transferred through the gap filler 13 adhering to the surface of the battery cell 11 to the inner surface of the module housing 12 closely adhering to the other surface of the gap filler 13.

Formation of the gap filler 13 into the battery module 10 should be done by applying a liquid thermally conductive composition using a general dispenser and then curing the liquid thermally conductive composition. On this occasion, it is preferable that the two-component type thermally conductive composition is used as described above. The two-component type is easy to be stored, and if mixed just before use, it is difficult to cure during an operation of applying with the dispenser and can be cured quickly after application. In addition, the application with the dispenser is also preferable in that it allows the liquid thermally conductive composition to fill relatively deep into the housing 12 of the battery module 10.

It is preferable that the gap filler 13 covering the battery cells 11 covers 20 to 40% of each battery cell 11 on one side of the battery cells 11. The coverage of 20% or more provides stable holding of the battery cells 11. In addition, sufficient coverage of the battery cells generating a large amount of heat provides favorable heat dissipation efficiency. On the other hand, the coverage of 40% or less provides efficient dissipation of the heat generated from the battery cells 11, and also prevents an increase in weight and deterioration of workability, and the like. In addition, in order to improve the heat dissipation efficiency, it is preferable that the side of the battery cells 11 where the electrodes 11a, 11b are located is covered with the gap filler 13, and it is more preferable that the whole of the electrodes 11a, 11b is covered with the gap filler 13.

As described above, the battery module 10 allows the heat generated from the battery cells 11 to escape to the module housing 12 through the gap filler 13.

It is also preferable that the gap filler 13 is used for a battery pack provided with a plurality of the battery module 10 inside. The battery pack generally comprises the plurality of the battery modules 10 and a housing of the battery pack in which the plurality of the battery module 10 is stored. In the battery pack, the gap filler 13 can be provided between the battery module 10 and the housing of the battery pack. This allows the heat that is escaped into the module housing 12 as described above to be further escaped to the housing of the battery pack, thereby enabling effective heat dissipation.

Further, since the thermally conductive member of the present invention is used for the gap filler 13, good adhesiveness can be obtained, even if the module housing 12 or the housing of the battery pack is made of the polypropylene. Therefore, even if the thermally conductive member of the present invention is subjected to vibration or shock, when, e.g., starting, stopping, or driving a car, it is difficult to occur failures such as falling off from the module housing 12 or the housing of the battery pack, and it becomes possible to maintain heat dissipation well.

### Examples

Hereinafter, the present invention will be described in more detail with reference to examples, but the present invention is not limited to these examples.

### [Tensile Shear Bond Strength]

Tensile shear bond strength was evaluated by measuring tensile shear strength as follows.

The tensile shear strength was measured in accordance with Tensile Shear Test of JIS K6850:1999. Two plates of an aluminum plate and a polypropylene plate, that are 100 mm in length, 25 mm in width, and 2 mm in thickness, were prepared, and arranged in a state where their front ends overlapped with each other in dimensions of 25 mm length × 25 mm width, while the liquid thermally conductive composition was applied between them at a thickness of 2 mm. The resultant piece was left for curing at 25°C for 24 hours to thereby prepare a test piece. Then, a tensile test was performed using a tensile testing machine (Toyo Seiki Seisaku-sho, Ltd. "STROGRAPH VE50") under conditions of 25°C of room temperature and 100 mm/min of a tensile speed, to measure the tensile shear strength, and to evaluate the maximum point of the tensile shear strength as the tensile shear bond strength.

### [E Hardness]

E hardness of the thermally conductive member was measured by a type E durometer in accordance with JIS K 6253.

### [Thermal Conductivity]

Thermally conductive member was cut into 20 mm thick plate and its thermal conductivity was measured in accordance with ASTM D5470.

### [Examples 1 to 3, 7 to 9]

The first agent and the second agent of the following compositions were prepared, and the first agent and the second agent were mixed at a mass ratio of 1:1 to obtain the thermally conductive composition having the composition listed in Table 1. The thermally conductive composition obtained was left to cure at room temperature (23°C) for 24 hours to obtain the thermally conductive member.

### <First agent>

- Organopolysiloxane A containing at least two alkenyl groups
- Polysiloxane compound D1 with the structure shown in the following Formula (3) 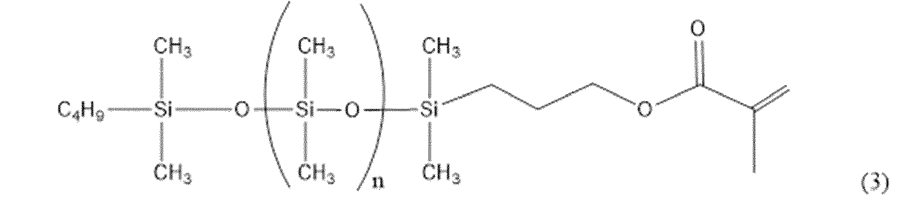 n=63, molecular weight: 5,000
- Aluminum hydroxide C 1 (the average particle size: 1 µm)
- Aluminum hydroxide C2 (the average particle size: 54 µm)
- A trace amount of platinum catalyst

### <Second agent>

- Organopolysiloxane A containing at least two alkenyl groups
- Hydrogenorganopolysiloxane B1 containing at least two hydrosilyl groups
- Hydrogenorganopolysiloxane B2 containing at least two hydrosilyl groups
- Aluminum hydroxide C 1 (the average particle size: 1 µm)
- Aluminum hydroxide C2 (the average particle size: 54 µm)

The hydrogenorganopolysiloxanes B1 and B2 are curing agents containing the SiH group at different proportions; and the proportion of the SiH group contained in the hydrogenorganopolysiloxane B2 is 7 mmol/g, and its viscosity is 30 cSt.

### [Examples 4 to 6]

The first agent and the second agent of the following compositions were prepared, and the first agent and the second agent were mixed at the mass ratio of 1:1 to obtain the thermally conductive composition having the composition listed in Table 1. The thermally conductive composition obtained was left to cure at room temperature (23°C) for 24 hours to obtain the thermally conductive member.

### <First agent>

- Organopolysiloxane A containing at least two alkenyl groups
- Polysiloxane compound D2 with the structure shown in the following Formula (4) 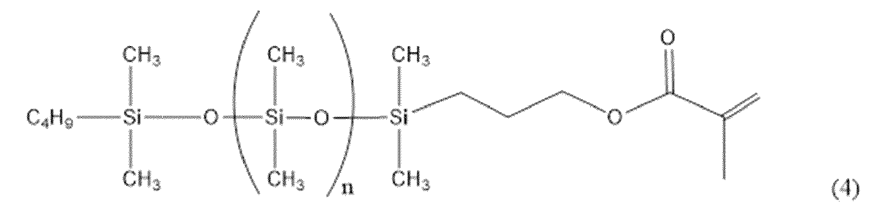 n=130, molecular weight: 10,000
- Aluminum hydroxide C1 (the average particle size: 1µm)
- Aluminum hydroxide C2 (the average particle size: 54 µm)
- A trace amount of platinum catalyst

### <Second agent>

- Organopolysiloxane A containing at least two alkenyl groups
- Hydrogenorganopolysiloxane B1 containing at least two hydrosilyl groups
- Hydrogenorganopolysiloxane B2 containing at least two hydrosilyl groups
- Aluminum hydroxide C 1 (the average particle size: 1 µm)
- Aluminum hydroxide C2 (the average particle size: 54 µm)

### [Comparative Example 1]

The first agent and the second agent of the following compositions were prepared, and the first agent and the second agent were mixed at the mass ratio of 1:1 to obtain the thermally conductive composition having the composition listed in Table 1. The thermally conductive composition obtained was left to cure at room temperature (23°C) for 24 hours to obtain the thermally conductive member.

### <First agent>

- Organopolysiloxane A containing at least two alkenyl groups
- Aluminum hydroxide C 1 (the average particle size: 1 µm)
- Aluminum hydroxide C2 (the average particle size: 54 µm)
- A trace amount of platinum catalyst

### <Second agent>

- Organopolysiloxane A containing at least two alkenyl groups
- Hydrogenorganopolysiloxane B1 containing at least two hydrosilyl groups
- Aluminum hydroxide C 1 (the average particle size: 1 µm)
- Aluminum hydroxide C2 (the average particle size: 54 µm)

### [Comparative Example 2]

The first agent and the second agent of the following compositions were prepared, and the first agent and the second agent were mixed at the mass ratio of 1:1 to obtain the thermally conductive composition having the composition listed in Table 1. The thermally conductive composition obtained was left to cure at room temperature (23°C) for 24 hours to obtain the thermally conductive member.

### <First agent>

- Organopolysiloxane A containing at least two alkenyl groups
- Aluminum hydroxide C 1 (the average particle size: 1 µm)
- Aluminum hydroxide C2 (the average particle size: 54 µm)
- A trace amount of platinum catalyst

### <Second agent>

- Organopolysiloxane A containing at least two alkenyl groups
- Hydrogenorganopolysiloxane B1 containing at least two hydrosilyl groups
- Hydrogenorganopolysiloxane B2 containing at least two hydrosilyl groups
- Aluminum hydroxide C 1 (the average particle size: 1 µm)
- Aluminum hydroxide C2 (the average particle size: 54 µm)

### [Comparative Example 3]

The first agent and the second agent of the following compositions were prepared, and the first agent and the second agent were mixed at the mass ratio of 1:1 to obtain the thermally conductive composition having the composition listed in Table 1. The thermally conductive composition obtained was left to cure at room temperature (23°C) for 24 hours to obtain the thermally conductive member.

### <First agent>

- Organopolysiloxane A containing at least two alkenyl groups
- Polydimethylsiloxane not containing the alkyl group having 4 or more carbon atoms and containing two methacrylate groups, as a comparative compound (Comparative compound of the (D) polysiloxane compound)
- Aluminum hydroxide C 1 (the average particle size: 1 µm)
- Aluminum hydroxide C2 (the average particle size: 54 µm)
- A trace amount of platinum catalyst

### <Second agent>

- Organopolysiloxane A containing at least two alkenyl groups
- Hydrogenorganopolysiloxane B1 containing at least two hydrosilyl groups
- Hydrogenorganopolysiloxane B2 containing at least two hydrosilyl groups
- Aluminum hydroxide C 1 (the average particle size: 1 µm)
- Aluminum hydroxide C2 (the average particle size: 54 µm)

**Table 1**

| | | | Examples | | | | | | | | | Comparative Examples | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| Composition of Thermally Conductive Composition (parts by mass) | (A) | Organopolysiloxane A containing at least two alkenyl groups | 35 | 35 | 35 | 35 | 35 | 35 | 40 | 45 | 47.5 | 50 | 50 | 35 |
| | (B) | Hydrogenorganopolysiloxane B1 containing at least two hydrosilyl groups | 35 | 35 | 35 | 35 | 35 | 35 | 40 | 45 | 47.5 | 50 | 50 | 35 |
| | | Hydrogenorganopolysiloxane B2 containing at least two hydrosilyl groups | 1 | 2.5 | 5 | 1 | 2.5 | 5 | 1 | 1 | 1 | | 1 | 1 |
| | (D) | Polysiloxane compound D1 with the structure shown in Formula (3) (the molecular weight: 5,000) | 30 | 30 | 30 | | | | 20 | 10 | 5 | | | |
| | | Polysiloxane compound D2 with the structure shown Formula (4) (the molecular weight: 10,000) | | | | 30 | 30 | 30 | | | | | | |
| | Comparative Compound | Comparative compound of the (D) polysiloxane compound | | | | | | | | | | | | 30 |
| | (C) | Aluminum hydroxide C1 (the average particle size: 1 µm) | 220 | 220 | 220 | 220 | 220 | 220 | 220 | 220 | 220 | 220 | 220 | 220 |
| | | Aluminum hydroxide C2 (the average particle size: 54 µm) | 440 | 440 | 440 | 440 | 440 | 440 | 440 | 440 | 440 | 440 | 440 | 440 |
| Evaluation results | | Tensile shear bond strength (MPa) | 0.10 | 0.22 | 0.24 | 0.12 | 0.24 | 0.31 | 0.12 | 0.14 | 0.20 | 0.04 | 0.08 | 0.07 |
| | | Thermal conductivity (W/mK) | 2 | 2 | 2 | 2 | 2 | 2 | 2 | 2 | 2 | 2 | 2 | 2 |
| | | E Hardness | 55 | 78 | 81 | 58 | 80 | 81 | 62 | 66 | 70 | 17 | 53 | 50 |

The thermally conductive members of Examples 1-9 formed from the thermally conductive compositions of the present invention including the (D) polysiloxane compound had a high tensile shear bond strength and excellent adhesiveness to the polypropylene. Further, from comparison among Examples 1-3 and also among Examples 4-6, all of the Examples including the same amount of the (D) polysiloxane compound, it was found that as the E hardness value of the thermally conductive member increased, the tensile shear bond strength increased and the bond strength to the polypropylene improved.

On the other hand, it was found that the thermally conductive members formed from the thermally conductive compositions of Comparative Examples 1-3, which did not include the (D) polysiloxane compound, had decreased tensile shear bond strength and degraded adhesiveness to the polypropylene.

### Reference Signs List

- 10: battery module
- 11: battery cell
- 12: housing of battery module (module housing)
- 13: gap filler

## Claims

1. A thermally conductive composition comprising:
(A) an organopolysiloxane containing at least two alkenyl groups,
(B) a hydrogenorganopolysiloxane containing at least two hydrosilyl groups,
(C) a thermally conductive filler, and
(D) a polysiloxane compound containing at least one alkyl group having 4 or more carbon atoms.

2. The thermally conductive composition according to claim 1, wherein the (D) polysiloxane compound contains a reactive group that can react with the (A) component or the (B) component.

3. The thermally conductive composition according to claim 2, wherein the reactive group is a (meth)acryloyl group.

4. The thermally conductive composition according to any one of claims 1 to 3, wherein the alkyl group contained in the (D) polysiloxane compound is a butyl group.

5. A thermally conductive member made by curing the thermally conductive composition according to any one of claims 1 to 4.

6. A battery module comprising a gap filler composed of the thermally conductive member according to claim 5, a plurality of battery cells, and a module housing for storing the plurality of the battery cells, wherein the gap filler is arranged inside the module housing.
